(19) Europäisches Patentamt
European Patent Office
Office européen des brevets

(11) **EP 3 269 757 A1**

(12) **EUROPEAN PATENT APPLICATION**
published in accordance with Art. 153(4) EPC

(43) Date of publication:
**17.01.2018 Bulletin 2018/03**

(21) Application number: **16761704.2**

(22) Date of filing: **07.03.2016**

(51) Int Cl.:
*C08J 3/12* (2006.01)     *C08J 3/24* (2006.01)

(86) International application number:
**PCT/JP2016/056967**

(87) International publication number:
**WO 2016/143736 (15.09.2016 Gazette 2016/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.03.2015 JP 2015046979**

(71) Applicant: **SDP Global Co., Ltd.**
**Tokyo 103-0023 (JP)**

(72) Inventors:
• **MATSUBARA, Yusuke**
  **Tokyo 103-0023 (JP)**
• **YOSHIMOTO, Ryo**
  **Tokyo 103-0023 (JP)**
• **AKAHANE, Sho**
  **Tokyo 103-0023 (JP)**

(74) Representative: **Vossius & Partner**
**Patentanwälte Rechtsanwälte mbB**
**Siebertstrasse 3**
**81675 München (DE)**

(54) **PROCESS FOR PRODUCING AQUEOUS-LIQUID-ABSORBING RESIN PARTICLES, AQUEOUS-LIQUID-ABSORBING RESIN PARTICLES, ABSORBENT, AND ABSORBENT ARTICLE**

(57)     Provided is a process for producing aqueous-liquid absorbing resin particles which, even after transportation or a diaper production step, are capable of combining the property of enabling liquid passing through interstices among the swollen gel particles with absorption performance under load. The present invention is: a process for producing aqueous-liquid absorbing resin articles (P), characterized by subjecting resin particles (B) that comprise a crosslinked polymer (A) comprising essential constituent units derived from a water-soluble vinyl monomer (a1) and/or a vinyl monomer (a2) which become a water-soluble vinyl monomer (a1) upon hydrolysis and from a crosslinking agent (b), to surface treatment by a specific method using a C4 or lower polyhydric alcohol (c), a polyvalent metal salt (d), and a polyglycidyl compound (e); and the aqueous-liquid absorbing resin articles (P).

**Description**

TECHNICAL FIELD

The present invention relates to a process for producing aqueous-liquid absorbing resin particles, aqueous-liquid absorbing resin particles produced by this production process, and an absorbent and an absorbent article including the particles.

BACKGROUND ART

Currently, absorbents including hydrophilic fiber such as pulp and aqueous-liquid absorbing resins produced mainly from acrylic acid (salt) are widely utilized for sanitary materials such as disposable diapers, sanitary napkins, and incontinence pads. From the viewpoint of recent improvement in QOL (quality of life), demands for such sanitary materials are shifting to those of lighter weight or of smaller thickness, and following this tendency, reduction of hydrophilic fiber usage has been demanded. Therefore, aqueous-liquid absorbing resin itself has been demanded to provide liquid diffusibility or initial absorption in an absorbent which have been taken by hydrophilic fibers, and aqueous-liquid absorbing resin superior in liquid absorption under load and liquid permeability between swollen gel particles has been needed.
As a method for improving liquid permeability between swollen gel particles, there has been known a method including increasing the crosslinking density of aqueous-liquid absorbing resin surface by specifically crosslinking the SAP (Super Absorbent Polymer) surface to suppress deformation of swollen gel surface, and thereby form gel gaps efficiently (see, for example, Patent Document 1). However, the liquid permeation between swollen gel particles has not been satisfactorily achieved by only conventional surface crosslinking.
As a method for improving liquid permeability between swollen gel particles, there have been known (1) a method of forming physical spaces by adding an inorganic compound such as silica and talc, (2) a method of forming gel gaps by suppressing adhesion of swollen gel particles by surface-treating with a hydrophobic polymer small in surface free energy, such as modified silicone, and (3) a method of adding aluminum sulfate, aluminum lactate, etc. (see, for example, Patent Document 2, Patent Document 3, and Patent Document 4). However, although the above-cited methods can improve the liquid permeability between swollen gel particles, the methods were problematic in that the amount of absorption under load is lowered and that resin particles are broken during transportation or a diaper production process and the liquid permeability is impaired.

PRIOR ART DOCUMENTS

PATENT DOCUMENTS

Patent Document 1: WO 00/053664
Patent Document 2: JP-A-2012-161788
Patent Document 3: JP-A-2013-133399
Patent Document 4: JP-A-2014-512440

SUMMARY OF THE INVENTION

PROBLEMS TO BE SOLVED BY THE INVENTION

The object of the present invention is to provide a process for producing aqueous-liquid absorbing resin particles which are compatible with liquid permeability between swollen gels and absorption performance under load even after transportation or a diaper production process.

SOLUTIONS TO THE PROBLEMS

The present inventor has accomplished the present invention as a result of earnest studies performed for attaining the above-mentioned object. That is, the present invention relates to a process for producing aqueous-liquid absorbing resin articles (P) comprising surface-treating resin particles (B) containing a crosslinked polymer (A) having, as essential constituent units, a water-soluble vinyl monomer (a1) and/or a vinyl monomer (a2) to be converted into the water-soluble vinyl monomer (a1) by hydrolysis and a crosslinking agent (b) by any one of the following methods [I] to [III] using a polyhydric alcohol having up to 4 carbon atoms (c), a polyvalent metal salt (d), and a polyglycidyl compound (e); an aqueous-liquid absorbing resin particle produced by the above production process, wherein the coverage of the surface of the particle with the polyvalent metal salt (d) determined by element mapping using energy dispersive X-ray spectrometry is 50 to 100%; an absorbent comprising aqueous-liquid absorbing resin particles produced by the above production process; and an absorbent article comprising the above absorbent.

Method [I]:

a method including surface-treating resin particles (B) using a mixed liquid (W1) containing a polyhydric alcohol having up to 4 carbon atoms (c), a polyvalent metal salt (d), a polyglycidyl compound (e), and water.

Method [II]:

a method including surface-treating resin particles (B) using a mixed liquid (W2) containing a polyhydric alcohol having up to 4 carbon atoms (c), a polyglycidyl compound (e), and water and containing no polyvalent metal salt (d) and a mixed liquid (W3) containing a polyhydric alcohol up to 4 carbon atoms (c), a polyvalent metal salt (d), and water and containing no polyglycidyl compound (e), the method comprising any one of the following steps (1) to (3):

(1) a step of surface-treating the resin particles (B) with the mixed liquid (W2), and then further surface-treating the resin particles (B) with the mixed liquid (W3) with or without performing heating treatment;
(2) a step of surface-treating the resin particles (B) with the mixed liquid (W3), and further surface-treating the resin particles (B) with the mixed liquid (W2) with or without performing heating treatment; and
(3) a step of performing surface treatment simultaneously with the mixed liquid (W2) and with the mixed liquid (W3).

Method [III]:

a method including surface-treating resin particles (B) using a mixed liquid (W2) containing a polyhydric alcohol having up to 4 carbon atoms (c), a polyglycidyl compound (e), and water and containing no polyvalent metal salt (d) and a mixed liquid (W4) containing a polyvalent metal salt (d) and water and containing no polyhydric alcohol up to 4 carbon atoms (c) and no polyglycidyl compound (e), the method comprising any one of the following steps (4) to (6):

(4) a step of surface-treating the resin particles (B) with the mixed liquid (W2), and then further surface-treating the resin particles (B) with the mixed liquid (W4) without performing heating treatment;
(5) a step of surface-treating the resin particles (B) with the mixed liquid (W4), and further surface-treating the resin particles (B) with the mixed liquid (W2) with or without performing heating treatment; and
(6) a step of performing surface treatment simultaneously with the mixed liquid (W2) and with the mixed liquid (W4).

ADVANTAGES OF THE INVENTION

The aqueous-liquid absorbing resin particles (P) produced by the production process of the present invention are inhibited from breaking of the resin particles during transportation or a diaper production process because they are coated on at least part of the surface thereof with a polyvalent metal salt (hereinafter, resistance to break is referred to as break resistance) and are excellent in absorption under load and liquid permeability between swollen gel particles after transportation or a diaper production process. Accordingly, the aqueous-liquid absorbing resin particles (P) exert excellent absorption performance (e.g., liquid diffusion property, absorption rate, and amount of absorption) stably under various use conditions and are less prone to cause skin irritation.

BRIEF DESCRIPTION OF THE DRAWINGS

Fig. 1 is a cross-sectional view schematically illustrating a filtration cylinder for measuring a gel liquid permeation rate.
Fig. 2 is a perspective view schematically illustrating a pressing shaft and weights for measuring a gel liquid permeation rate.

MODE FOR CARRYING OUT THE INVENTION

The process of the present invention for producing aqueous-liquid absorbing resin articles (P) is characterized by including surface-treating resin particles (B) containing a crosslinked polymer (A) having, as essential constituent units, a water-soluble vinyl monomer (a1) and/or a vinyl monomer (a2) to be converted into the water-soluble vinyl monomer (a1) by hydrolysis and a crosslinking agent (b) using a polyhydric alcohol having up to 4 carbon atoms (c), a polyvalent metal salt (d), and a polyglycidyl compound (e).

The water-soluble vinyl monomer (a1) as used in the present invention is not particularly limited, and there can be used such conventional monomers as vinyl monomers having at least one water-soluble substituent and an ethylenically unsaturated group disclosed in paragraphs 0007 to 0023 of Japanese Patent No. 3648553 (e.g., anionic vinyl monomers, nonionic vinyl monomers, and cationic vinyl monomers), anionic vinyl monomers, nonionic vinyl monomers, and cationic vinyl monomers disclosed in paragraphs 0009 to 0024 of JP-A-2003-165883, and vinyl monomers having at least one group selected from the group consisting of a carboxy group, a sulfo group, a phosphono group, a hydroxy group, a carbamoyl group, an amino group, and an ammonio group disclosed in paragraphs 0041 to 0051 of JP-A-2005-75982.

The vinyl monomer (a2) that turns into the water-soluble vinyl monomer (a1) by hydrolysis [hereinafter, also referred to as hydrolyzable vinyl monomer (a2)] is not particularly limited, and there can be used such conventional vinyl monomers as vinyl monomers having at least one hydrolyzable substituent that turns into a water-soluble substituent by hydrolysis disclosed in paragraphs 0024 to 0025 of Japanese Patent No. 3648553, and vinyl monomers having at least one hydrolyzable substituent [such as 1,3-oxo-2-oxapropylene (-CO-O-CO-) group, an acyl group, and a cyano group] disclosed in paragraphs 0052 to 0055 of JP-A-2005-75982. The water-soluble vinyl monomer as used herein means a vinyl monomer soluble in an amount of at least 100 g in 100 g of water at 25°C. The hydrolyzability of the hydrolyzable vinyl monomer (a2) means a property to be hydrolyzed by the action of water and, if necessary, of a catalyst (e.g., an acid or a base), thereby becoming water-soluble. Although the hydrolysis of the hydrolyzable vinyl monomer (a2) may be carried out during polymerization, after polymerization, or both during and after polymerization, the hydrolysis is preferably carried out after polymerization from the viewpoint of the absorption performance of aqueous-liquid absorbing resin particles (P) to be obtained.

Among these, preferred from the viewpoint of absorption performance are water-soluble vinyl monomers (a1), more preferred are anionic vinyl monomers and vinyl monomers having a carboxy (salt) group, a sulfo (salt) group, an amino group, a carbamoyl group, an ammonio group, or a mono-, di- or tri-alkylammonio group, even more preferred are vinyl monomers having a carboxy (salt) group or a carbamoyl group, particularly preferred are (meth) acrylic acid (salts) and (meth) acrylamide, particularly preferred are (meth)acrylic acids (salts), and most preferred are acrylic acid (salts).

The "carboxy (salt) group" means a "carboxy group" or a "carboxylate group", and the "sulfo (salt) group" means a "sulfo group" or a "sulfonate group." The (meth) acrylic acid (salt) means acrylic acid, a salt of acrylic acid, methacrylic acid, or a salt of methacrylic acid and the (meth)acrylamide means acrylamide or methacrylamide. Examples of such salts include salts of alkali metal (lithium, sodium, potassium, etc.), salts of alkaline earth metal (magnesium, calcium, etc.), and ammonium ($NH_4$) salts. Among these salts, salts of alkali metals and ammonium salts are preferred from the viewpoint of absorption performance, salts of alkali metals are more preferred, and sodium salts are particularly preferred.

When one of a water-soluble vinyl monomer (a1) and a hydrolyzable vinyl monomer (a2) is contained as a constituent unit, a single species of each of the monomers may be contained as a constituent unit or, alternatively, two or more species may be contained as constituent units, if necessary. The same is also applied to the case where both a water-soluble vinyl monomer (a1) and a hydrolyzable vinyl monomer (a2) are contained as constituent units. When both the water-soluble vinyl monomer (a1) and the hydrolyzable vinyl monomer (a2) are contained as constituent units, their contained molar ratio [(a1)/(a2)] is preferably from 75/25 to 99/1, more preferably from 85/15 to 95/5, particularly preferably from 90/10 to 93/7, and most preferably from 91/9 to 92/8. Within such ranges, further improved absorption performance is achieved.

In addition to the water-soluble vinyl monomer (a1) and the hydrolyzable vinyl monomer (a2), an additional vinyl monomer (a3) copolymerizable with them can be contained as a constituent unit of the crosslinked polymer (A). The additional vinyl monomer (a3) may be used singly or two or more of the same may be used in combination.

The additional copolymerizable vinyl monomer (a3) is not particularly limited and conventional hydrophobic vinyl monomers (e.g., hydrophobic vinyl monomers disclosed in paragraphs 0028 to 0029 of Japanese Patent No. 3648553, vinyl monomers disclosed in paragraph 0025 of JP-A-2003-165883 and paragraph 0058 of JP-A-2005-75982) can be used, and specifically, the following vinyl monomers (i) to (iii) can be used.

(i) Aromatic ethylenic monomers having 8 to 30 carbon atoms
Styrenes, such as styrene, α-methylstyrene, vinyltoluene, and hydroxystyrene, vinylnaphthalene and halogenated forms of styrene, such as dichlorostyrene, etc.

(ii) Aliphatic ethylenic monomers having 2 to 20 carbon atoms
Alkenes (e.g., ethylene, propylene, butene, isobutylene, pentene, heptene, diisobutylene, octene, dodecene, and octadecene), and alkadienes (e.g., butadiene and isoprene), etc.
(iii) Alicyclic ethylenic monomers having 5 to 15 carbon atoms
Monoethylenically unsaturated monomers (e.g., pinene, limonene, and indene) ; and polyethylenic vinyl monomers (e.g., cyclopentadiene, bicyclopentadiene, and ethylidene norbornene), etc.

From the viewpoint of absorption performance, the content (mol%) of the additional vinyl monomer (a3) unit, based on the total number of moles of the water-soluble vinyl monomer (a1) unit and the hydrolyzable vinyl monomer (a2) unit, is preferably from 0 to 5, more preferably from 0 to 3, even more preferably from 0 to 2, and particularly preferably from 0 to 1.5, and from the viewpoint of absorption performance, etc., the content of the additional vinyl monomer (a3) is most preferably 0 mol%.

The crosslinking agent (b) is not particularly limited, and conventional crosslinking agents (e.g., crosslinking agents having two or more ethylenically unsaturated groups, crosslinking agents having at least one functional group capable of reacting with a water-soluble substituent and having at least one ethylenically unsaturated group and crosslinking agents having at least two functional groups each capable of reacting with a water-soluble substituent disclosed in paragraphs 0031 to 0034 of Japanese Patent No. 3648553, crosslinking agents having two or more ethylenically unsaturated groups, crosslinking agents having an ethylenically unsaturated group and a reactive functional group and crosslinking agents having two or more reactive substituents disclosed in paragraphs 0028 to 0031 of JP-A-2003-165883, crosslinkable vinyl monomers disclosed in paragraph 0059 of JP-A-2005-75982 and crosslinkable vinyl monomers disclosed in paragraphs 0015 to 0016 of JP-A-2005-95759) can be used. Among these, from the viewpoint of absorption performance, etc., crosslinking agents having two or more ethylenically unsaturated groups are preferred; triallyl cyanurate, triallyl isocyanurate, and poly(meth)allyl ethers of polyols having 2 to 10 carbon atoms are more preferred; triallyl cyanurate, triallyl isocyanurate, tetraallyloxyethane, and pentaerythritol triallyl ether are particularly preferred; and pentaerythritol triallyl ether is most preferred. The crosslinking agent (b) may be used singly or two or more of the same may be used in combination.

The content (mol%) of the crosslinking agent (b) units is preferably 0.001 to 5 based on the total number of moles of the water-soluble vinyl monomer (a1) units and the hydrolyzable vinyl monomer (a2) units, more preferably 0.005 to 3, and particularly preferably 0.01 to 1. Within such ranges, the absorption performance is further improved.

The resin particles (B) containing the crosslinked polymer (A) can be produced by, heating, drying and pulverizing according to needs, a hydrous gel polymer (composed of a crosslinked polymer and water) prepared by conventional aqueous solution polymerization (adiabatic polymerization, film polymerization, spray polymerization, etc.; e.g., JP-A-55-133413) or conventional reverse phase suspension polymerization (e.g., JP-B-54-30710, JP-A-56-26909, and JP-A-1-5808). The crosslinked polymer (A) contained in the resin particles (B) may be of a single type and also may be a mixture of two or more types thereof.

Preferred of polymerization methods is a solution polymerization method, and the aqueous solution polymerization method is particularly preferred because it does not need use of an organic solvent, etc. and it is thus advantageous in cost aspect, and an adiabatic aqueous solution polymerization method is most preferred in that a water-soluble absorbing resin having a large water retention amount and a small amount of water-soluble components is obtained and the temperature control during polymerization is unnecessary.

When performing aqueous solution polymerization, a mixed solvent containing water and an organic solvent can be used, and examples of the organic solvent include methanol, ethanol, acetone, methyl ethyl ketone, N,N-dimethylformamide, dimethyl sulfoxide, and mixtures of two or more thereof.

When performing aqueous solution polymerization, the amount (% by weight) of an organic solvent used is preferably 40 or less, and more preferably 30 or less, based on the weight of water.

When using a catalyst for polymerization, a conventional catalyst for radical polymerization can be used and examples thereof include azo compounds [e.g., azobisisobutyronitrile, azobiscyanovaleric acid, and 2,2'-azobis(2-amidinopropane) hydrochloride], inorganic peroxides (e.g., hydrogen peroxide, ammonium persulfate, potassium persulfate, and sodium persulfate), organic peroxides [e.g., benzoyl peroxide, di-tert-butyl peroxide, cumene hydroperoxide, succinic acid peroxide, and di(2-ethoxyethyl) peroxydicarbonate], and redox catalysts (combinations of a reducing agent such as alkali metal sulfite or bisulfite, ammonium sulfite, ammonium bisulfite and ascorbic acid, and an oxidizing agent such as alkali metal persulfates, ammonium persulfate, hydrogen peroxide, and organic peroxides) . These catalysts may be used singly and two or more thereof may be used in combination.

The amount (% by weight) of the radical polymerization catalyst used is preferably 0.0005 to 5, and more preferably 0.001 to 2, based on the total weight of the water-soluble vinyl monomer (a1) and the hydrolyzable vinyl monomer (a2).

When applying a suspension polymerization method or a reverse phase suspension polymerization method as a polymerization method, the polymerization may be carried out in the presence of a conventional dispersing agent or a conventional surfactant, if necessary. In the case of a reverse phase suspension polymerization method, the polymerization can be carried out using a conventional hydrocarbon solvent such as xylene, n-hexane, and n-heptane.

The polymerization onset temperature can appropriately be adjusted depending on the type of the catalyst to be used, and it is preferably 0 to 100°C, and more preferably 5 to 80°C.

When a solvent (organic solvents, water, etc.) is used for polymerization, it is preferred to distill off the solvent after the polymerization. When an organic solvent is contained in the solvent, the content (% by weight) of the organic solvent after distillation, based on the weight of the crosslinked polymer (A), is preferably 0 to 10, more preferably 0 to 5, particularly preferably 0 to 3, and most preferably 0 to 1. When the content is within such ranges, the absorption performance of the aqueous-liquid absorbing resin particles (P) is further improved.

When water is contained in the solvent, the content (% by weight) of water after distillation, based on the weight of the crosslinked polymer (A), is preferably 0 to 20, more preferably 0 to 10, particularly preferably 2 to 9, and most preferably 3 to 8. Within such ranges, further improved absorption performance is achieved.

The hydrous gel polymer to be produced by polymerization may be chopped, if necessary. The size (longest diameter) of the chopped gel is preferably from 50 $\mu$m to 10 cm, more preferably from 100 $\mu$m to 2 cm, and particularly preferably from 1 mm to 1 cm. When the size is within such ranges, dryability during a drying step is further improved.

Chopping can be carried out by a conventional method and chopping can be done by using a conventional chopping machine (e.g., Bex Mill, a rubber chopper, Pharma Mill, a mincing machine, an impact type pulverizer, a roll type pulverizer), etc.

The contents of an organic solvent and water can be determined from the weight loss of a sample when heating it with an infrared moisture content analyzer {e.g., JE400 manufactured by KETT; 120$\pm$5°C, 30 minutes, atmosphere humidity before heating: 50$\pm$10%RH, lamp specification: 100 V, 40 W}.

As a method of distilling off a solvent (including water), a method of distilling (drying) it with hot blast having a temperature of from 80 to 230°C, a thin film drying method using, e.g., a drum dryer heated at 100 to 230°C, a (heating) reduced pressure drying method, a freeze-drying method, a drying method using infrared radiation, decantation, filtration, etc. can be applied.

The resin particles (B) can be pulverized after drying. The method of pulverization is not particularly limited and ordinary pulverizing apparatuses (e.g., a hammer pulverizer, an impact pulverizer, a roll type pulverizer, and a pneumatic pulverizer) can be used. The pulverized crosslinked polymer can be adjusted in its particle size by sieving, etc., if necessary.

In the case of sieving the particles as needed, the resin particles (B) containing the crosslinked polymer (A), which contain the crosslinked polymer (A) as the main ingredient thereof, may contain a small amount of some other ingredients such as a residual solvent and a residual crosslinked component under certain circumstances. The weight average particle diameter ($\mu$m) of the resin particles (B) is preferably 100 to 800, more preferably 200 to 700, even more preferably 250 to 600, particularly preferably 300 to 500, and most preferably 350 to 450. Within such ranges, the absorption performance is further improved.

The weight average particle diameter is measured by the method disclosed in Perry's Chemical Engineers' Handbook, Sixth Edition (McGraw-Hill Book Company, 1984, page 21) by using a RO-TAP sieve shaker and standard sieves (JIS Z8801-1:2006). Specifically, JIS standard sieves are combined, for example, in the order of 1000 $\mu$m, 850 $\mu$m, 710 $\mu$m, 500 $\mu$m, 425 $\mu$m, 355 $\mu$m, 250 $\mu$m, 150 $\mu$m, 125 $\mu$m, 75 $\mu$m, 45 $\mu$m , and a bottom tray when viewed from the top. About 50 g of particles to be measured are put on the top sieve and then shaken for five minutes by a RO-TAP sieve shaker. Then, the particles received on the respective sieves and the bottom tray are weighed and the weight fractions of the particles on the respective sieves are calculated with the total weight of the particles considered to be 100% by weight. The calculated values are plotted on a logarithmic probability sheet {taking the size of openings of a sieve (particle diameter) as abscissa and the weight fraction as ordinate} and then a line connecting the respective points is drawn. Subsequently, a particle diameter that corresponds to a weight fraction of 50% by weight is determined and this is defined as a weight average particle diameter.

Since a smaller content of particulates contained in the resin particles (B) results in better absorption performance, the content (% by weight) of the particulates being 106 $\mu$m or less in size (preferably being 150 $\mu$m or less in size) in the total weight of the resin particles (B) containing the crosslinked polymer (A) is preferably 3 or less, and more preferably 1 or less. The content of the particulates can be determined using a graph prepared when determining the aforementioned weight average particle diameter.

The shape of the resin particles (B) is not particularly limited and may be an irregularly pulverized form, a scaly form, a pearl-like form, a rice grain form, etc. Among these, an irregularly pulverized form is preferred because good entangling with a fibrous material in an application such as disposable diaper is ensured and the fear of falling off from the fibrous material is eliminated.

The resin particles (B) containing the crosslinked polymer (A) may be treated with a hydrophobic substance, if necessary, and methods disclosed in JP-A-2013-231199, etc. can be utilized.

Examples of the polyhydric alcohol (c) having up to 4 carbon atoms in the present invention include ethylene glycol, propylene glycol, 1,3-propanediol, glycerol, and 1,4-butanediol. Among these, propylene glycol and glycerol are preferred from the viewpoint of safety and easy availability, and propylene glycol is more preferred. The use of (c) increases the coverage of the resin particles with the polyvalent metal salt (d) and improves the break resistance of the resin particles. The (c) may be used singly or two or more of the same may be used in combination.

From the viewpoint of absorption performance and break resistance, the amount (% by weight) of the polyhydric alcohol (c) having up to 4 carbon atoms used, based on the weight of the resin particles (B), is preferably 0.05 to 5, more preferably 0.1 to 3, and particularly preferably 0.2 to 2.

Examples of the polyvalent metal salt (d) in the present invention include inorganic acid salts of zirconium, aluminum, or titanium, and examples of the inorganic acid to form (d) include sulfuric acid, hydrochloric acid, nitric acid, hydrobromic acid, hydroiodic acid, and phosphoric acid. Examples of an inorganic acid salt of zirconium include zirconium sulfate and zirconium chloride; examples of an inorganic acid salt of aluminum include aluminum sulfate, aluminum chloride, aluminum nitrate, aluminum ammonium sulfate, aluminum potassium sulfate, and aluminum sodium sulfate; and examples of an inorganic acid salt of titanium include titanium sulfate, titanium chloride, and titanium nitrate.

Among these, inorganic acid salts of aluminum and inorganic acid salts of titanium are preferred from the viewpoint of easy availability and solubility, aluminum sulfate, aluminum chloride, aluminum potassium sulfate, and aluminum sodium sulfate are more preferred, aluminum sulfate and aluminum sodium sulfate are particularly preferred, and aluminum sodium sulfate is most preferred.

By using the polyvalent metal salt (d), at least part of the surface of the resin particles (B) is coated with (d) and the break resistance of the resin particles is improved. The (d) may be used singly or two or more of the same may be used in combination.

From the viewpoint of absorption performance and break resistance, the amount (% by weight) of the polyvalent metal salt (d) used, based on the weight of the resin particles (B), is preferably 0.05 to 5, more preferably 0.1 to 3, and particularly preferably 0.2 to 2.

Examples of the polyglycidyl compound (e) in the present invention include polyglycidyl ethers of polyhydric alcohols, such as ethylene glycol diglycidyl ether, glycerol triglycidyl ether, and sorbitol polyglycidyl ether. The number of functional groups of the polyhydric alcohol is preferably 2 to 8, and more preferably 2 to 3 from the viewpoint of absorption performance, and the number of glycidyl groups per molecule is preferably 2 to 10, and more preferably 2 to 4 from the viewpoint of absorption performance. The (e) may be used singly or two or more of the same may be used in combination.

From the viewpoint of absorption performance, the amount (% by weight) of the polyglycidyl compound (e) used, based on the weight of the resin particles (B), is preferably 0.001 to 3, more preferably 0.005 to 2, and particularly preferably 0.01 to 1.

In the present invention, examples of the method of surface-treating the resin particles (B) containing the crosslinked polymer (A) using the polyhydric alcohol (c) having up to 4 carbon atoms, the polyvalent metal salt (d), and the polyglycidyl compound (e) include the following Methods [I] to [III].

- Method [I]:

    A method including surface-treating resin particles (B) using a mixed liquid (W1) containing a polyhydric alcohol having up to 4 carbon atoms (c), a polyvalent metal salt (d), a polyglycidyl compound (e), and water.

- Method [II]:

    A method including surface-treating resin particles (B) using a mixed liquid (W2) containing a polyhydric alcohol having up to 4 carbon atoms (c), a polyglycidyl compound (e), and water and containing no polyvalent metal salt (d) and a mixed liquid (W3) containing a polyhydric alcohol having up to 4 carbon atoms (c), a polyvalent metal salt (d), and water and containing no polyglycidyl compound (e), the method comprising any one of the following steps (1) to (3):

        (1) the step of surface-treating the resin particles (B) with the mixed liquid (W2), and then further surface-treating the resin particles (B) with the mixed liquid (W3) with or without performing heating treatment;
        (2) the step of surface-treating the resin particles (B) with the mixed liquid (W3), and further surface-treating the resin particles (B) with the mixed liquid (W2) with or without performing heating treatment; and
        (3) the step of performing surface treatment simultaneously with the mixed liquid (W2) and with the mixed liquid (W3).

- Method [III]:

A method including surface-treating resin particles (B) using a mixed liquid (W2) containing a polyhydric alcohol having up to 4 carbon atoms (c), a polyglycidyl compound (e), and water and containing no polyvalent metal salt (d) and a mixed liquid (W4) containing a polyvalent metal salt (d) and water and containing no polyhydric alcohol having up to 4 carbon atoms (c) and no polyglycidyl compound (e), the method comprising any one of the following steps (4) to (6):

(4) the step of surface-treating the resin particles (B) with the mixed liquid (W2), and then further surface-treating the resin particles (B) with the mixed liquid (W4) without performing heating treatment;

(5) the step of surface-treating the resin particles (B) with the mixed liquid (W4), and further surface-treating the resin particles (B) with the mixed liquid (W2) with or without performing heating treatment; and

(6) the step of performing surface treatment simultaneously with the mixed liquid (W2) and with the mixed liquid (W4).

Among Methods [I] to [III], preferred from the viewpoint of productivity is Method [I].

One specific example of Method [I] is a method of uniformly mixing the mixed liquid (W1) containing the polyhydric alcohol having up to 4 carbon atoms (c), the polyvalent metal salt (d), the polyglycidyl compound (e), and water with the resin particles (B) by use of a mixing apparatus such as a cylindrical mixer, a screw type mixer, a screw type extruder, a Turbulizer, a Nauta mixer, a double-arm kneader, a fluidization mixer, a V-type mixer, a mincing mixer, a ribbon mixer, a fluidization mixer, an airflow mixer, a rotating disc mixer, a conical blender, and a roll mixer.

The temperature at the time of surface-treating by Method [I] is not particularly limited and is preferably 10 to 150°C, more preferably 20 to 100°C, and particularly preferably 25 to 80°C.

Usually, heating treatment is performed after performing the surface treatment by Method [I]. From the viewpoint of the break resistance of resin particles, the heating temperature is preferably 100 to 150°C, more preferably 110 to 145°C, and particularly preferably 125 to 140°C. In the case of heating at a temperature of 150°C or lower, indirect heating utilizing steam can be employed which is advantageous for facilities, whereas at a heating temperature lower than 100°C, absorption performance may be worsen. The heating time can appropriately be set depending on the heating temperature, and from the viewpoint of absorption performance, it is preferably 5 to 60 minutes, and more preferably 10 to 40 minutes.

In Methods [II] and [III], specific examples of the method of surface-treating resin particles with mixture liquids (W2) to (W4) include methods the same as the specific examples of the above-described Method [I].

Examples of the method of surface-treating with the mixed liquid (W2) and with the mixed liquid (W3) simultaneously in Method [II] and the method of surface-treating with the mixed liquid (W2) and with the mixed liquid (W4) simultaneously in Method [III] include a method including feeding the resin particles (B) into the above-mentioned mixing apparatus, then feeding the mixed liquid (W2) and the mixed liquid (W3) or the mixed liquid (W2) and the mixed liquid (W4) separately and simultaneously, and mixing them uniformly.

When heating treatment is performed between surface treatment with different mixed liquids in Steps (1) and (2) of Method [II] and Step (5) of Method [III], the heating temperature and the heating time are the same as the heating temperature and the heating time in the heating treatment after the surface treatment of the above-described Method [I].

In Step (4) of Method [III], it is necessary to perform surface treatment with the mixed liquid (W4) without performing heating treatment after the surface treatment with the mixed liquid (W2) because break resistance will deteriorate if heating treatment is performed between the surface treatment with the mixed liquid (W2) and the surface treatment with the mixed liquid (W4).

Usually, heating treatment is performed after performing the surface treatment by Methods [II] and [III]. The heating temperature and the heating time in this case are analogous to the heating temperature and the heating time in the heating treatment after the surface treatment of the above Method [I].

In the present invention, the step of surface-treating resin particles using inorganic particles (f) can be included, and the aqueous-liquid absorbing resin particles (P) may be particles prepared by surface-treating resin particles with the inorganic particles (f). The liquid permeability is improved by surface-treating with the inorganic particles (f).

Examples of the inorganic particles (f) include colloidal silica, fumed silica, clay, and talc; from the viewpoint of easy availability, handleability, and absorption performance, colloidal silica and silica are preferred, and colloidal silica is more preferred. The (f) may be used singly or two or more of the same may be used in combination.

From the viewpoint of absorption performance, the amount (% by weight) of the inorganic particles (f) used, based on the weight of the resin particles (B), is preferably 0.01 to 5, more preferably 0.05 to 1, and particularly preferably 0.1 to 0.5.

The surface treatment with the inorganic particles (f) may be performed to the resin particles (B) containing the crosslinked polymer (A), or to resin particles after the first surface treatment and before further performing surface treatment in Step (1) and Step (2) in the above Method [II] and in Step (4) and Step (5) in [III], or alternatively, to resin particles after performing the surface treatment of the above methods [I] to [III].

When surface-treating the resin particles (B) using inorganic particles (f), a method of including the inorganic particles (f) in the mixed liquid (W1) in the above Method [I], a method of including the inorganic particles (f) in the mixed liquid (W2) and/or the mixed liquid (W3) in the above Method [II], and a method of including the inorganic particles (f) in the mixed liquid (W2) and/or the mixed liquid (W4) in the above Method [III] are preferred.

The aqueous-liquid absorbing resin particles (P) in the present invention may, if necessary, be further subjected to surface crosslinking treatment with a surface crosslinking agent. As the surface crosslinking agent, there can be used conventional surface crosslinking agents (e.g., polyglycidyl compounds, polyamines, polyaziridine compounds, polyisocyanate compounds, etc. disclosed in JP-A-59-189103; polyhydric alcohols disclosed in JP-A-58-180233 and JP-A-61-16903; silane coupling agents disclosed in JP-A-61-211305 and JP-A-61-252212; alkylene carbonates disclosed in JP-A-5-508425; polyoxazoline compounds disclosed in JP-A-11-240959; and polyvalent metals disclosed in JP-A-51-136588 and JP-A-61-257235). Among these surface crosslinking agents, polyglycidyl compounds, polyhydric alcohols and polyamines are preferred, polyglycidyl compounds and polyhydric alcohols are more preferred, polyglycidyl compounds are particularly preferred, and ethylene glycol diglycidyl ether is most preferred from the viewpoint of economical efficiency and absorption characteristics. The surface crosslinking agent may be used singly or two or more of the same may be used in combination.

When surface crosslinking treatment is performed, the amount (% by weight) of the surface crosslinking agent used is not particularly limited because it can be varied depending upon the type of the surface crosslinking agent, the conditions for crosslinking, target performance, etc.; however, from the viewpoint of absorption characteristics, etc., it is preferably from 0.001 to 3, more preferably from 0.005 to 2, and particularly preferably from 0.01 to 1, based on the weight of the resin particles (B).

The surface crosslinking treatment can be performed simultaneously with the surface treatment of the resin particles (B) containing the crosslinked polymer (A) with the polyhydric alcohol (c) having up to 4 carbon atoms, the polyvalent metal salt (d), and the polyglycidyl compound (e), or aside from and before or after the surface treatment.

Examples of the method of performing the surface crosslinking treatment simultaneously with the surface treatment step with (c) to (e) include methods including adding a surface crosslinking agent to the mixed liquids (W1) to (W4) in the above Methods [I] to [III].

When the surface crosslinking treatment is performed aside from the surface treatment step with (c) to (e), conventional methods (e.g., Japanese Patent No. 3648553, JP-A-2003-165883, JP-A-2005-75982, and JP-A-2005-95759) can be applied as the method for the surface crosslinking treatment.

The aqueous-liquid absorbing resin particles (P) produced by the production process of the present invention can, if necessary, contain additives (e.g., conventional (disclosed in JP-A-2003-225565 and JP-A-2006-131767) antiseptics, antifungal agents, antibacterial agents, antioxidants, UV absorbers, coloring agents, aromatics, deodorants, liquid permeation improvers, organic fibrous materials, etc.). When such an additive is contained, the content (% by weight) of the additive, based on the weight of the crosslinked polymer (A), is preferably 0.001 to 10, more preferably 0.01 to 5, particularly preferably 0.05 to 1, and most preferably 0.1 to 0.5.

The aqueous-liquid absorbing resin particles (P) produced by the production process of the present invention are coated on at least part of the surface thereof with a polyvalent metal salt (d). From the viewpoint of break resistance, the coverage of the surface of the resin particles by the polyvalent metal salt (d) is preferably 50 to 100%, more preferably 75% to 100%, particularly preferably 80% to 100%, and most preferably 90 to 100%. The coverage is measured by the method described below (namely, for example, element mapping using energy dispersive X-ray spectrometry, etc.).

The apparent density (g/ml) of the aqueous-liquid absorbing resin particles (P) produced by the production process of the present invention is preferably 0.54 to 0.70, more preferably 0.56 to 0.65, and particularly preferably 0.58 to 0.60. Within such ranges, the skin irritation resistance of an absorbent article is further improved. The apparent density of (P) is measured at 25°C in accordance with JIS K7365:1999.

According to the production process of the present invention, there can be produced aqueous-liquid absorbing resin articles containing a crosslinked polymer (A) having, as essential constituent units, a water-soluble vinyl monomer (a1) and/or a vinyl monomer (a2) to be converted into the water-soluble vinyl monomer (a1) by hydrolysis and a crosslinking agent (b), and also a polyvalent metal salt (d), wherein the coverage of the surface of the particles with the polyvalent metal salt (d) determined by element mapping using energy dispersive X-ray spectrometry is 50 to 100%. The aqueous-liquid absorbing resin articles may further contain inorganic particles (f).

The absorbent of the present invention contains the aqueous-liquid absorbing resin particles (P) produced by the production process of the present invention. The aqueous-liquid absorbing resin particles (P) may be used alone as the absorbent, or alternatively may be processed together with a different material to form the absorbent.

Examples of the different material include a fibrous material. The structure and the production method of the absorbent in the case of using together with a fibrous material are analogous to conventional structures and methods (JP-A-2003-225565, JP-A-2006-131767, JP-A-2005-097569, etc.).

Preferred as the fibrous material are cellulosic fiber, organic synthetic fiber and mixtures of cellulosic fiber and organic synthetic fiber.

Examples of the cellulosic fiber include natural fibers such as fluff pulp and cellulosic chemical fibers such as viscose rayon, acetate rayon, and cuprammonium rayon. Such cellulosic natural fibers are not particularly limited with respect to their source material (needle-leaf trees, broadleaf trees, etc.), production method (chemical pulp, semichemical pulp, mechanical pulp, CTMP, etc.), bleaching method, etc.

Examples of the organic synthetic fiber include polypropylene fiber, polyethylene fiber, polyamide fiber, polyacrylonitrile fiber, polyester fiber, polyvinyl alcohol fiber, polyurethane fiber, and heat-fusible composite fiber (fiber in which at least two of said fibers differing in melting point are hybridized in a sheath-core type, an eccentric type, a parallel type, or the like, fiber in which at least two of said fibers are blended, and fiber in which the surface layer of said fibers is modified, etc.).

Preferred among these fibrous base materials are cellulosic natural fiber, polypropylene fiber, polyethylene fiber, polyester fiber, heat-fusible composite fiber, and mixed fiber thereof, and fluff pulp, heat-fusible fiber, and mixed fiber thereof are more preferred in that a resulting absorbent is excellent in shape retention after water absorption.

The fibrous material is not particularly limited in length and thickness, and it can suitably be used if its length is within a range of 1 to 200 mm and its thickness is within a range of 0.1 to 100 deniers. The shape thereof is also not particularly limited if it is fibrous, and examples of the shape include a narrow cylindrical form, a split yarn form, a staple form, a filament form, and a web form.

When the aqueous-liquid absorbing resin particles (P) are processed together with a fibrous material to form an absorbent, the weight ratio of the aqueous-liquid absorbing resin particles (P) to the fiber (the weight of the aqueous-liquid absorbing resin particles/the weight of the fiber) is preferably from 40/60 to 90/10, and more preferably from 70/30 to 80/20.

The absorbent article of the present invention includes the absorbent described above. The absorbent article can be applied not only as sanitary goods such as a disposable diaper or a sanitary napkin but also as items to be used for various applications such as absorbent materials or retention materials for various types of aqueous liquid, a gelling agent, etc. The method for producing the absorbent article is analogous to conventional methods (those disclosed in JP-A-2003-225565, JP-A-2006-131767, and JP-A-2005-097569, etc.).

EXAMPLES

The present invention is further described below by means of Examples and Comparative Examples, but the present invention is not limited thereto. Hereafter, unless otherwise stated, "part (s)" means "part (s) by weight" and "%" means "% by weight." The coverage with the polyvalent metal salt (d), the water retaining capacity relative to physiological saline, the amount of absorption under load, and the gel liquid permeability of aqueous-liquid absorbing resin particles were measured by the methods described below, and a break resistance test was performed by the method described below.

<Method for measuring the coverage with polyvalent metal salt (d)>

Ten or more particles of a measurement sample were fixed to a sample table with a carbon tape stuck in such a manner that the particles did not overlap and then were set to a field emission scanning electron microscope "JSM-7000" manufactured by JEOL with an energy dispersive X-ray analysis (EDS analysis) apparatus manufactured by Oxford Instruments. One particle was displayed on a monitor at 150 magnifications, and EDS analysis was performed in an element mapping mode. Then, a coverage was calculated from the following formula where the detection area of a characteristic element of the polyvalent metal salt (d) (e.g., aluminum and sulfur of aluminum sulfate or aluminum sodium sulfate) was denoted by S1 and the detection area of a characteristic element of an aqueous liquid absorbing resin particle (P) (usually, the characteristic element is sodium because the particle is a sodium salt of polyacrylic acid) was denoted by S0.

$$\text{Coverage } (\%) = (S1/S0) \times 100$$

When there were a plurality of characteristic elements, the coverage was defined by the average of the coverages of the individual elements. The measurement was carried out for five particles per one measurement sample, and the average value was taken as the coverage of the measurement sample. As the detection areas S0 and S1, there were used values determined by outputting the frequency distribution of the detection intensity of the individual characteristic elements in the form of a histogram.

<Method for measuring water retaining capacity>

1.00 g of a measurement sample was put into a tea bag (20 cm long, 10 cm wide) made of nylon net with a mesh size of 63 $\mu$m (JIS Z8801-1:2006) and then was immersed in 1,000 ml of physiological saline (salt concentration: 0.9%) for 1 hour without stirring, followed by pulling up and draining off water by hanging the tea bag for 15 minutes. Then, the sample in the tea bag was put in a centrifuge and centrifugally dewatered at 150 G for 90 seconds, thereby removing excess physiological saline. Subsequently, the weight (h1) of the sample including the tea bag was measured and then a water retaining capacity was calculated from the following formula. The temperature of the physiological saline used and that of the measurement atmosphere were adjusted to 25°C $\pm$ 2°C.

$$\text{Water retaining capacity (g/g)} = (h1) - (h2)$$

(h2) is the weight of the tea bag measured with no measurement sample by analogous procedures to those described above.

<Method for measuring the amount of absorption under load>

Into a cylindrical plastic tube (inner diameter: 25 mm, height: 34 mm) with a nylon net having a mesh size of 63 $\mu$m (JIS Z8801-1:2006) attached to the bottom of the tube, there was weighed 0.16 g of a measurement sample screened into the range of 250 to 500 $\mu$m using a 30 mesh sieve and a 60 mesh sieve, and then the cylindrical plastic tube was made to stand vertically and the measurement sample was leveled to have an almost uniform thickness on the nylon net and then a weight (weight: 310.6 g, outer diameter: 24.5 mm) was put on the measurement sample. The weight (M1) of the cylindrical plastic tube as the whole was measured, and then the cylindrical plastic tube containing the measurement sample and the weight was made to stand vertically in a petri dish (diameter: 12 cm) containing 60 ml of physiological saline (salt concentration: 0.9%) and was immersed with the nylon net side facing down and was left standing for 60 minutes. After a lapse of 60 minutes, the cylindrical plastic tube was pulled up from the petri dish and then was tilted to draw the water attaching to the bottom of the tube to drip in the form of water drops, thereby removing excess water. Then, the weight (W2) of the cylindrical plastic tube containing the measurement sample and the weight as the whole was measured and then the amount of absorption under load was determined from the following formula. The temperature of the physiological saline used and that of the measurement atmosphere were 25°C $\pm$ 2°C.

$$\text{The amount (g/g) of absorption under load} = \{(M2) - (M1)\}/0.16$$

<Method for measuring gel liquid permeation rate>

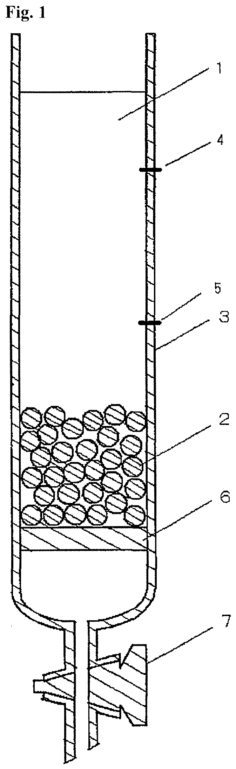

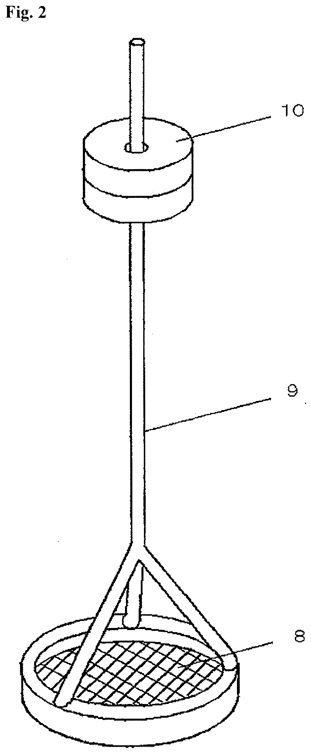

The gel liquid permeation rate was measured by the following operations using the instruments illustrated in Fig. 1 and Fig. 2.
Swollen gel particles 2 were prepared by immersing 0.32 g of a measurement sample in 150 ml of physiological saline 1 (salt concentration: 0.9%) for 30 minutes. Then, into a filtration cylinder equipped with a wire gauze 6 (mesh size: 106 $\mu$m, JIS Z8801-1:2006) and a freely openable and closable cock 7 (inner diameter of the liquid passing portion: 5 mm) at the bottom of a vertically standing cylinder 3 {diameter (inner diameter) : 25.4 mm, length: 40 cm; there were graduation lines 4 and 5 at the positions of 60 ml and 40 ml from the bottom, respectively}, the prepared swollen gel particles 2 were transferred together with the physiological saline while closing the cock 7. Then, a pressing shaft 9 (weight: 22 g, length: 47 cm) with a circular wire gauze 8 (mesh size: 150 $\mu$m, diameter: 25 mm) attached perpendicularly with respect to the wire gauze plane was put on the swollen gel particles 2 in such a manner that the wire gauze came into contact with the swollen gel particles, and then a weight 10 (88.5 g) was put on the pressing shaft 9 and was left standing for 1 minute. Subsequently, the cock 7 was opened and the time (T1; second) taken by the liquid surface in the filtration cylinder to move from the 60 ml graduation line 4 to the 40 ml graduation line 5 was measured, and a gel liquid permeation rate (ml/min) was determined from the following formula.

$$\text{Gel liquid permeation rate (ml/min)} = 20\ ml \times 60/(T1 - T2)$$

The temperature of the physiological saline used and that of the measurement atmosphere were 25°C ± 2°C, and T2 is the time measured by the same operation as described above for the case of using no measurement sample.

<Method of break resistance property test>

15 g of a measurement sample was weighed, put into a fiber mixer manufactured by Panasonic Corporation, and then was subjected to treatment of stirring for 1 second with a low speed/high speed selector switch set to low speed.

<Example 1>

131 parts of acrylic acid (a1-1) {produced by Mitsubishi Chemical Corporation, purity: 100%}, 0.44 parts of a crosslinking agent (b-1) {pentaerythritol triallyl ether, produced by Daiso Co., Ltd.}, and 362 parts of deionized water were kept at 3°C under stirring and mixing. After adjusting the dissolved oxygen amount to 1 ppm or less by introducing nitrogen into this mixture, 0.5 parts of a 1% aqueous solution of hydrogen peroxide, 1 part of a 2% aqueous solution of ascorbic acid, and 0.1 parts of a 2% aqueous solution of 2,2'-azobis(amidinopropane)dihydrochloride were added and mixed, so that polymerization was initiated. After the temperature of the mixture reached 80°C, polymerization was performed at 80±2°C for about 5 hours, thereby obtaining hydrous gel.

Then, while chopping the hydrous gel with a mincing machine (12VR-400K, manufactured by ROYAL), 162 parts of a 45% aqueous solution of sodium hydroxide was added and mixed to neutralize, thereby obtaining a neutralized gel. Moreover, the neutralized hydrous gel was dried in a through-air drier (at 200°C, wind speed: 2 m/second), thereby obtaining a dried material. The dried material was pulverized with a juicing blender (OSTERIZER BLENDER manufactured by Oster) and then sieved to adjust a particle size range according to mesh size from 710 to 150 μm, thereby obtaining resin particles (B-1) containing a crosslinked polymer.

Subsequently, while stirring 100 parts of the resulting resin particles (B-1) at high speed (by using "High-speed stirring turbulizer" manufactured by Hosokawa Micron Corporation, rate of revolution: 2000 rpm), a mixed liquid prepared by mixing 1.2 parts of propylene glycol as the polyhydric alcohol (c) having up to 4 carbon atoms, 1.2 parts of sodium aluminum sulfate dodecahydrate as the polyvalent metal salt (d), 0.09 parts of ethylene glycol diglycidyl ether as the polyglycidyl compound (e), and 3.5 parts of water was added thereto, mixed uniformly, and then heated at 130°C for 30 minutes, so that aqueous-liquid absorbing resin particles (P-1) of the present invention were obtained.

<Example 2>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed liquid prepared by mixing 0.6 parts of propylene glycol as the polyhydric alcohol (c) having up to 4 carbon atoms, 0.09 parts of ethylene glycol diglycidyl ether as the polyglycidyl compound (e), and 1.1 parts of water and a mixed liquid prepared by mixing 0.5 parts of propylene glycol as the polyhydric alcohol (c) having up to 4 carbon atoms, 1.2 parts of sodium aluminum sulfate dodecahydrate as the polyvalent metal salt (d), and 2.3 parts of water were added simultaneously, mixed uniformly, and then heated at 130°C for 30 minutes, so that aqueous-liquid absorbing resin particles (P-2) of the present invention were obtained.

<Example 3>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed liquid prepared by mixing 0.6 parts of propylene glycol as the polyhydric alcohol (c) having up to 4 carbon atoms, 0.09 parts of ethylene glycol diglycidyl ether as the polyglycidyl compound (e), 1 part of Klebosol 30 cal 25 (colloidal silica, produced by AZ Material Ltd.) as the inorganic particles (f), and 1.1 parts of water and a mixed liquid prepared by mixing 0.5 parts of propylene glycol as the polyhydric alcohol (c) having up to 4 carbon atoms, 1.2 parts of sodium aluminum sulfate dodecahydrate as the polyvalent metal salt (d), and 2.3 parts of water were added simultaneously, mixed uniformly, and then heated at 130°C for 30 minutes, so that aqueous-liquid absorbing resin particles (P-3) of the present invention were obtained.

<Example 4>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed liquid prepared by mixing 1.2 parts of propylene glycol as the polyhydric alcohol (c) having up to 4 carbon atoms, 0.09 parts of ethylene glycol diglycidyl ether as the polyglycidyl compound (e), and 3.5 parts of water was added thereto, mixed uniformly, then heated at 130°C for 30 minutes, then cooled to room temperature, and then a mixed liquid prepared by mixing 0.5 parts of propylene glycol as the polyhydric alcohol (c) having up to 4 carbon atoms, 1.2 parts of sodium aluminum sulfate dodecahydrate as the polyvalent metal salt (d), and 2.3 parts of water was added, mixed uniformly, and then heated at 130°C for 30 minutes, so that aqueous-liquid absorbing resin particles (P-4) of the present invention were obtained.

<Example 5>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed liquid prepared by mixing 2.0 parts of propylene glycol as the polyhydric alcohol (c) having up to 4 carbon atoms, 1.2 parts of sodium aluminum sulfate dodecahydrate as the polyvalent metal salt (d), 0.12 parts of ethylene glycol diglycidyl ether as the polyglycidyl compound (e), and 4.3 parts of water was added thereto, mixed uniformly, and then heated at 130°C for 30 minutes, so that aqueous-liquid absorbing resin particles (P-5) of the present invention were obtained.

<Example 6>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed liquid prepared by mixing 4.5 parts of propylene glycol as the polyhydric alcohol (c) having up to 4 carbon atoms, 2.4 parts of sodium aluminum sulfate dodecahydrate as the polyvalent metal salt (d), 0.18 parts of ethylene glycol diglycidyl ether as the polyglycidyl compound (e), and 6.1 parts of water was added thereto, mixed uniformly, and then heated at 130°C for 30 minutes, so that aqueous-liquid absorbing resin particles (P-6) of the present invention were obtained.

<Example 7>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed liquid prepared by mixing 3.0 parts of propylene glycol as the polyhydric alcohol (c) having up to 4 carbon atoms, 3.6 parts of sodium aluminum sulfate dodecahydrate as the polyvalent metal salt (d), 0.12 parts of ethylene glycol diglycidyl ether as the polyglycidyl compound (e), and 7.9 parts of water was added thereto, mixed uniformly, and then heated at 130°C for 30 minutes, so that aqueous-liquid absorbing resin particles (P-7) of the present invention were obtained.

<Example 8>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed liquid prepared by mixing 0.2 parts of propylene glycol as the polyhydric alcohol (c) having up to 4 carbon atoms, 0.4 parts of sodium aluminum sulfate dodecahydrate as the polyvalent metal salt (d), 0.08 parts of ethylene glycol diglycidyl ether as the polyglycidyl compound (e), and 1.5 parts of water was added thereto, mixed uniformly, and then heated at 150°C for 30 minutes, so that aqueous-liquid absorbing resin particles (P-8) of the present invention were obtained.

<Comparative Example 1>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed liquid prepared by mixing 1.2 parts of propylene glycol as the polyhydric alcohol (c) having up to 4 carbon atoms, 0.09 parts of ethylene glycol diglycidyl ether as the polyglycidyl compound (e), and 3.5 parts of water was added thereto, mixed uniformly, then heated at 130°C for 30 minutes, then cooled to room temperature, and then while stirring at high speed (by using "High-speed stirring turbulizer" manufactured by Hosokawa Micron Corporation, rate of revolution: 2000 rpm), a mixed liquid prepared by mixing 1.2 parts of sodium aluminum sulfate dodecahydrate as the polyvalent metal salt (d) and 2.3 parts of water was added, mixed uniformly, and heated at 130°C for 30 minutes, so that aqueous-liquid absorbing resin particles (R-1) for comparison purpose were obtained.

<Comparative Example 2>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed liquid prepared by mixing 1.2 parts of propylene glycol as the polyhydric alcohol (c) having up to 4 carbon atoms, 0.09 parts of ethylene glycol diglycidyl ether as the polyglycidyl compound (e), and 3.5 parts of water was added thereto, mixed uniformly, then heated at 130°C for 30 minutes, then cooled to room temperature, and then while stirring at high speed (by using "High-speed stirring turbulizer" manufactured by Hosokawa Micron Corporation, rate of revolution: 2000 rpm), 0.2 parts of silica (Aerosil 200 produced by Aerosil Inc.) as the inorganic particles (f) was added, mixed uniformly, and heated at 130°C for 30 minutes, so that aqueous-liquid absorbing resin particles (R-2) for comparison purpose were obtained.

The coverages and the performance evaluation results (the water retaining capacity, the amount of absorption under load, and the gel liquid permeation rate before and after a break resistance property test, and the rate of change of the individual measured values before and after the break resistance property test) of the aqueous-liquid absorbing resin particles (P-1) to (P-8) of Examples 1 to 8 and the aqueous-liquid absorbing resin particles (R-1) to (R-2) of Comparative Examples 1 to 2 are shown in Table 1.

[Table 1]

| | | Example | | | | | | | | Comparative Example | |
|---|---|---|---|---|---|---|---|---|---|---|---|
| | | 1 | 2 | 3 | 4 | 5 | 6 | 7 | 8 | 1 | 2 |
| Coverage (%) | | 63 | 62 | 68 | 58 | 76 | 83 | 95 | 51 | 43 | 46 |
| Before break resistance test | Water retaining capacity (g/g) | 39.2 | 38.7 | 38.3 | 38.6 | 35.7 | 32.1 | 33.5 | 47.2 | 38.4 | 39.3 |
| | p (g/g) Amount of absorption under load | 20.8 | 22.1 | 20.4 | 23.7 | 25.5 | 25.9 | 25.0 | 12.2 | 24.3 | 17.1 |
| | Gel liquid permeability (ml/min) | 41.1 | 37.3 | 47.9 | 31.2 | 56.1 | 184.6 | 112.2 | 3.8 | 27.6 | 36.5 |
| After break resistance test | Water retaining capacity (g/g) | 40.1 | 40.0 | 39.1 | 39.5 | 36.7 | 33.1 | 34.0 | 47.8 | 39.0 | 40.3 |
| | Amount of absorption under load (g/g) | 16.6 | 18.0 | 16.6 | 20.5 | 23.0 | 24.4 | 22.7 | 10.7 | 17.4 | 16.0 |
| | Gel liquid permeability (ml/min) | 28.3 | 26.0 | 32.5 | 22.1 | 46.8 | 118.8 | 77.0 | 2.2 | 14.2 | 15.4 |
| Rate of change before and after break resistance test (%) | Water retaining capacity | 102 | 103 | 102 | 102 | 103 | 103 | 101 | 101 | 101 | 103 |
| | Amount of absorption under load | 80 | 81 | 82 | 87 | 90 | 94 | 91 | 88 | 71 | 93 |
| | Gel liquid permeability | 69 | 70 | 68 | 71 | 83 | 64 | 69 | 58 | 52 | 42 |

INDUSTRIAL APPLICABILITY

The aqueous-liquid absorbing resin particles produced by the production process of the present invention can be compatible with the liquid permeability between swollen gel particles and the absorption performance under load and they can be processed by applying them to various types of absorbents to form absorbent articles having a large absorption and being superior in restore performance or surface dry feeling. Accordingly, they are suitably used for sanitary goods, such as disposable diapers (a disposable diaper for children, a disposable diaper for adults, etc.), napkins (a sanitary napkin, etc.), paper towel, pads (an incontinence pad, a surgical under pad, etc.), and pet sheets (a pet urine absorbing sheet), and is extremely suited for disposable diapers. Moreover, the aqueous-liquid absorbing resin particles produced by the production process of the present invention are useful not only for sanitary goods but also for other various applications such as a pet urine absorbent, a urine gelatinizer of a portable toilet, an agent for preserving freshness of vegetables and fruits etc., a drip absorbent for meats and fishes, a refrigerant, a disposable body warmer, a battery gelatinizer, a water retention agent for plants, soil, etc., a condensation preventing agent, a water stopping material, a packing material, artificial snow, etc.

DESCRIPTION OF REFERENCE SIGNS

1 Physiological saline
2 Hydrous gel particles
3 Cylinder
4 Graduation line at the position of 60 ml from the bottom
5 Graduation line at the position of 40 ml from the bottom
6 Wire gauze
7 Cock
8 Cylindrical wire gauze
9 Pressing shaft
10 Weight

**Claims**

1.  A process for producing aqueous-liquid absorbing resin articles (P) comprising surface-treating resin particles (B) containing a crosslinked polymer (A) having, as essential constituent units, a water-soluble vinyl monomer (a1) and/or a vinyl monomer (a2) to be converted into the water-soluble vinyl monomer (a1) by hydrolysis and a crosslinking agent (b) by any one of the following methods [I] to [III] using a polyhydric alcohol having up to 4 carbon atoms (c), a polyvalent metal salt (d), and a polyglycidyl compound (e):

    Method [I]:

       a method including surface-treating resin particles (B) using a mixed liquid (W1) containing a polyhydric alcohol having up to 4 carbon atoms (c), a polyvalent metal salt (d), a polyglycidyl compound (e), and water;

    Method [II]:

       a method including surface-treating resin particles (B) using a mixed liquid (W2) containing a polyhydric alcohol having up to 4 carbon atoms (c), a polyglycidyl compound (e), and water and containing no polyvalent metal salt (d) and a mixed liquid (W3) containing a polyhydric alcohol up to 4 carbon atoms (c), a polyvalent metal salt (d), and water and containing no polyglycidyl compound (e), the method comprising any one of the following steps (1) to (3):

       (1) a step of surface-treating the resin particles (B) with the mixed liquid (W2), and then further surface-treating the resin particles (B) with the mixed liquid (W3) with or without performing heating treatment;
       (2) a step of surface-treating the resin particles (B) with the mixed liquid (W3), and further surface-treating the resin particles (B) with the mixed liquid (W2) with or without performing heating treatment; and
       (3) a step of performing surface treatment simultaneously with the mixed liquid (W2) and with the mixed liquid (W3); and

Method [III]:

a method including surface-treating resin particles (B) using a mixed liquid (W2) containing a polyhydric alcohol having up to 4 carbon atoms (c), a polyglycidyl compound (e), and water and containing no polyvalent metal salt (d) and a mixed liquid (W4) containing a polyvalent metal salt (d) and water and containing no polyhydric alcohol up to 4 carbon atoms (c) and no polyglycidyl compound (e), the method comprising any one of the following steps (4) to (6):

(4) a step of surface-treating the resin particles (B) with the mixed liquid (W2), and then further surface-treating the resin particles (B) with the mixed liquid (W4) without performing heating treatment;
(5) a step of surface-treating the resin particles (B) with the mixed liquid (W4), and further surface-treating the resin particles (B) with the mixed liquid (W2) with or without performing heating treatment; and
(6) a step of performing surface treatment simultaneously with the mixed liquid (W2) and with the mixed liquid (W4).

2. The production process according to claim 1, comprising a step of surface-treating resin particles using inorganic particles (f).

3. The production process according to claim 2, wherein the mixed liquid (W1) in Method [I] contains the inorganic particles (f), the mixed liquid (W2) and/or the mixed liquid (W3) in Method [II] contain (s) the inorganic particles (f), and the mixed liquid (W2) and/or the mixed liquid (W4) in Method [III] contain(s) the inorganic particles (f).

4. The production process according to any one of claims 1 to 3, wherein the polyvalent metal salt (d) is an inorganic acid salt of zirconium, aluminum, or titanium.

5. An aqueous-liquid absorbing resin particle produced by the production process according to any one of claims 1 to 4, wherein the coverage of the surface of the particle with the polyvalent metal salt (d) determined by element mapping using energy dispersive X-ray spectrometry is 50 to 100%.

6. An absorbent comprising aqueous-liquid absorbing resin particles produced by the production process according to any one of claims 1 to 4.

7. An absorbent article comprising the absorbent according to claim 6.

Fig. 1

**Fig. 2**

## INTERNATIONAL SEARCH REPORT

International application No.

PCT/JP2016/056967

### A. CLASSIFICATION OF SUBJECT MATTER
*C08J3/12*(2006.01)i, *C08J3/24*(2006.01)i

According to International Patent Classification (IPC) or to both national classification and IPC

### B. FIELDS SEARCHED

Minimum documentation searched (classification system followed by classification symbols)
C08J3/00-28, C08F

Documentation searched other than minimum documentation to the extent that such documents are included in the fields searched
| | | |
|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2014/041968 A1 (Nippon Shokubai Co., Ltd.), 20 March 2014 (20.03.2014), claims; paragraphs [0162], [0163], [0172], [0177] to [0180]; examples; particularly, example 11 & US 2015/0225514 A1 claims; paragraphs [0297] to [0296], [0307], [0313] to [0317]; example 11 & EP 2896645 A1 & CN 104619755 A & KR 10-2015-0056572 A | 1-7 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 May 2016 (25.05.16) | 07 June 2016 (07.06.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2016/056967

C (Continuation).   DOCUMENTS CONSIDERED TO BE RELEVANT

| Category* | Citation of document, with indication, where appropriate, of the relevant passages | Relevant to claim No. |
|---|---|---|
| X | WO 2008/108277 A1  (Nippon Shokubai Co., Ltd.), 12 September 2008 (12.09.2008), claims; paragraphs [0073] to [0093], [0108]; examples; particularly, examples 5, 6 & US 2010/0072421 A1 claims; paragraphs [0078] to [0098], [0113]; examples 5, 6 & EP 2116572 A1          & CN 101627086 A | 1-7 |
| X | WO 2012/102407 A1  (Nippon Shokubai Co., Ltd.), 02 August 2012 (02.08.2012), claims; paragraphs [0222], [0223], [0227], [0228], [0662]; paragraph [0663](example E4); table 8 & US 2014/0031473 A1 claims; example E4; table 8 & EP 2669318 A1          & CN 103459473 A | 1-7 |
| X | JP 2010-539272 A  (BASF SE), 16 December 2010 (16.12.2010), claims; paragraphs [0079] to [0082]; examples & US 2010/0206897 A1 claims; examples & WO 2009/034153 A1    & EP 2190393 A1 & CN 101801323 A | 1-7 |
| X | JP 2005-501960 A  (BASF AG.), 20 January 2005 (20.01.2005), claims; paragraphs [0097] to [0099]; examples; particularly, examples 3a, 4a & US 2004/0265387 A1 claims; examples 3a, 4a & WO 2003/022316 A1    & EP 1427452 A1 & DE 10202839 A | 1-7 |
| A | WO 2014/021388 A1  (Nippon Shokubai Co., Ltd.), 06 February 2014 (06.02.2014), entire text (Family: none) | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 00053664 A
- JP 2012161788 A
- JP 2013133399 A
- JP 2014512440 A
- JP 3648553 B
- JP 2003165883 A
- JP 2005075982 A
- JP 2005095759 A
- JP 55133413 A
- JP 54030710 B
- JP 56026909 A
- JP 1005808 A
- JP 2013231199 A
- JP 59189103 A
- JP 58180233 A
- JP 61016903 A
- JP 61211305 A
- JP 61252212 A
- JP 5508425 A
- JP 11240959 A
- JP 51136588 A
- JP 61257235 A
- JP 2003225565 A
- JP 2006131767 A
- JP 2005097569 A

### Non-patent literature cited in the description

- Perry's Chemical Engineers' Handbook. McGraw-Hill Book Company, 1984, 21